# EUROPÄISCHE PATENTSCHRIFT

(11) **EP 3 856 598 B1**
(45) Veröffentlichungstag und Bekanntmachung des Hinweises auf die Patenterteilung: **24.07.2024**
(21) Anmeldenummer: 19783434.4
(22) Anmeldetag: 18.09.2019
(51) Int. Cl.: B60W 30/16, B60K 31/00, B60W 30/18, G08G 1/16

(54) **VERFAHREN UND VORRICHTUNG ZUM UNTERSTÜTZEN EINES SPURWECHSELVORGANGS FÜR EIN FAHRZEUG**
METHOD AND DEVICE FOR SUPPORTING A LANE-CHANGING PROCESS FOR A VEHICLE
PROCÉDÉ ET DISPOSITIF POUR ASSISTER UN CHANGEMENT DE VOIE DE CIRCULATION POUR UN VÉHICULE

(30) Priorität: 25.09.2018 DE 102018216364
(43) Veröffentlichungstag der Anmeldung: 04.08.2021
(73) Patentinhaber: VOLKSWAGEN AKTIENGESELLSCHAFT, 38440 Wolfsburg (DE)
(72) Erfinder: HOEDT, Jens, 30161 Hannover (DE); AMINEV, Timur, 38122 Braunschweig (DE); EIGEL, Thomas, 13585 Berlin (DE); DETERING, Stefan, 38110 Braunschweig (DE); LINDNER, Sören, 10249 Berlin (DE)
(86) Internationale Anmeldenummer: PCT/EP2019/075032
(87) Internationale Veröffentlichungsnummer: WO 2020/064465

(56) Entgegenhaltungen:
- EP-A1- 3 281 830
- DE-A1- 102014 000 843
- DE-A1- 102014 217 846
- DE-A1- 102015 223 656
- DE-A1- 102018 107 341

## Beschreibung

Die Erfindung betrifft ein Verfahren und eine Vorrichtung zum Unterstützen eines Spurwechselvorgangs für ein Fahrzeug mit einer Geschwindigkeitsregeleinrichtung.

Moderne Fahrzeuge sind mit einer Vielzahl von Assistenzsystemen ausgestattet, welche einen Fahrer beim Führen des Fahrzeugs unterstützen. Beispielsweise sind Geschwindigkeitsregeleinrichtungen bekannt, die eine Geschwindigkeit des Fahrzeugs auf eine Sollgeschwindigkeit regeln. Ferner sind Überholassistenten bekannt, welche einen Fahrer beim Überholvorgang unterstützen können.

Aus der DE 101 14 187 A1 ist ein Verfahren zur Unterstützung eines Überholvorgangs bei Kraftfahrzeugen mit einer Abstands- und Geschwindigkeitsregeleinrichtung bekannt, bei dem auch Fahrzeuge auf der Überholspur berücksichtigt werden und, wenn die mit Sensoren erfasste Verkehrssituation oder ein Eingriff des Fahrers auf einen Überholwunsch schließen lässt, vorübergehend auf eine erhöhte Überholgeschwindigkeit geregelt wird. Hierbei ist vorgesehen, dass die Abstände zu den auf der Überholspur befindlichen Fahrzeugen gemessen werden und die Überholgeschwindigkeit in Abhängigkeit von den Abständen des zu überholenden Fahrzeugs und mindestens des unmittelbar vorausfahrenden Fahrzeugs auf der Überholspur berechnet wird.

Aus der DE 10 2014 000 843 A1 sind ein Verfahren und ein Fahrerassistenzsystem zur Durchführung eines Fahrspurwechsels eines auf einer Ist-Spur autonom fahrenden Fahrzeugs auf eine benachbarte Ziel-Spur bekannt. Das Verfahren zeichnet sich dadurch aus, dass der Fahrspurwechsel durch das Fahrzeug selbsttätig oder durch eine Eingabe im Fahrzeug initialisiert wird, auf Basis von ersten Orts- und Bewegungsdaten des Fahrzeugs und von zweiten Orts- und Bewegungsdaten von auf der Ziel-Spur fahrenden zweiten Fahrzeugen ein Vorliegen einer für den Fahrspurwechsel adäquaten Verkehrslücke ermittelt wird, und bei Vorliegen einer adäquaten Verkehrslücke der Fahrspurwechsel von dem Fahrzeug autonom ausgeführt wird.

Aus DE 10 2014 217 846 A1 ist ein Verfahren zur Durchführung eines Fahrspurwechsels durch ein Fahrerassistenzsystem eines Kraftfahrzeugs bekannt, bei dem auf einer Zielfahrspur befindliche Objekte erfasst werden, wobei eine Anzahl von Geschwindigkeiten der auf der Zielfahrspur erfassten Objekte ermittelt wird, wobei in Abhängigkeit von der oder jeder ermittelten Geschwindigkeit eine für den Fahrspurwechsel von einer Ausgangsfahrspur auf die Zielfahrspur benötigte Zielgeschwindigkeit des Kraftfahrzeugs ermittelt wird, wobei in Abhängigkeit der ermittelten Zielgeschwindigkeit eine Abstandsanpassung zwischen dem Kraftfahrzeug und einem sich auf der Ausgangsfahrspur vor dem Kraftfahrzeug befindlichen Objekt erfolgt, und wobei erst nach erfolgter Abstandsanpassung ein automatischer Fahrspurwechsel durch das Fahrerassistenzsystem eingeleitet wird. Des Weiteren ist ein Fahrerassistenzsystem bekannt, mittels welchem ein entsprechendes Verfahren durchführbar ist.

Das Unterstützen eines Spurwechselvorgangs ist derzeit jedoch nur unbefriedigend gelöst.

Der Erfindung liegt die Aufgabe zu Grunde, ein Verfahren und eine Vorrichtung zum Unterstützen eines Spurwechselvorgangs zu schaffen, bei denen eine Unterstützungsfunktion verbessert bereitgestellt werden kann.

Die Aufgabe wird erfindungsgemäß durch ein Verfahren mit den Merkmalen des Patentanspruchs 1 und eine Vorrichtung mit den Merkmalen des Patentanspruchs 7 gelöst. Vorteilhafte Ausgestaltungen der Erfindung ergeben sich aus den Unteransprüchen.

Insbesondere wird ein Verfahren zum Unterstützen eines Spurwechselvorgangs für ein Fahrzeug mit einer Geschwindigkeitsregeleinrichtung zur Verfügung gestellt, wobei die Geschwindigkeitsregeleinrichtung eine Geschwindigkeit des Fahrzeugs auf eine Sollgeschwindigkeit regelt, umfassend die folgenden Schritte: Empfangen von Umfelddaten eines Umfelds des Fahrzeugs mittels einer Eingangseinrichtung, wobei die Umfelddaten zumindest Informationen über andere Fahrzeuge auf einem Zielfahrstreifen umfassen, Bestimmen einer aktuellen Verkehrsdichte und einer aktuellen Flussgeschwindigkeit auf dem Zielfahrstreifen auf Grundlage der Umfelddaten mittels einer Auswerteeinrichtung, Anpassen der Sollgeschwindigkeit auf Grundlage der bestimmten aktuellen Verkehrsdichte und der aktuellen Flussgeschwindigkeit mittels der Auswerteeinrichtung, Übergeben der angepassten Sollgeschwindigkeit an die Geschwindigkeitsregeleinrichtung.

Ferner wird eine Vorrichtung zum Unterstützen eines Spurwechselvorgangs für ein Fahrzeug mit einer Geschwindigkeitsregeleinrichtung geschaffen, wobei die Geschwindigkeitsregeleinrichtung eine Geschwindigkeit des Fahrzeugs auf eine Sollgeschwindigkeit regelt, umfassend eine Eingangseinrichtung, wobei die Eingangseinrichtung derart ausgebildet ist, Umfelddaten eines Umfelds des Fahrzeugs zu empfangen, wobei die Umfelddaten zumindest Informationen über andere Fahrzeuge auf einem Zielfahrstreifen umfassen, eine Auswerteeinrichtung, wobei die Auswerteeinrichtung derart ausgebildet ist, eine aktuelle Verkehrsdichte und eine aktuelle Flussgeschwindigkeit auf dem Zielfahrstreifen auf Grundlage der Umfelddaten zu bestimmen und die Sollgeschwindigkeit auf Grundlage der bestimmten aktuellen Verkehrsdichte und der aktuellen Flussgeschwindigkeit anzupassen und die angepasste Sollgeschwindigkeit an die Geschwindigkeitsregeleinrichtung zu übergeben.

Eine Grundidee der Erfindung ist, aus bereitgestellten Umfelddaten, welche zumindest Informationen über andere Fahrzeuge auf einem Zielfahrstreifen umfassen, eine Verkehrsdichte und eine aktuelle Flussgeschwindigkeit zu bestimmen. Eine Verkehrsdichte ist als Fahrzeuge pro Streckenabschnitt definiert. Die Flussgeschwindigkeit ist eine mittlere Geschwindigkeit, d.h. eine Durchschnittsgeschwindigkeit, der Fahrzeuge auf dem Zielfahrstreifen, beispielsweise der nächsten 2, 5 oder 10 Fahrzeuge im Umfeld des Fahrzeugs etc. In Abhängigkeit der bestimmten aktuellen Verkehrsdichte und der aktuellen Flussgeschwindigkeit wird dann eine Sollgeschwindigkeit einer Geschwindigkeitsregeleinrichtung des Fahrzeugs angepasst. Ist beispielsweise ein Überholvorgang über einen links vom aktuellen Fahrstreifen liegenden Fahrstreifen als Zielfahrstreifen geplant und haben die Fahrzeuge auf diesem Zielfahrstreifen eine im Vergleich zur aktuellen Sollgeschwindigkeit größere Flussgeschwindigkeit, so wird die Sollgeschwindigkeit auf diese Flussgeschwindigkeit hochgesetzt und anschließend an die Geschwindigkeitsregeleinrichtung übergeben. Das Fahrzeug beschleunigt dann und kann auf den Zielfahrstreifen wechseln und den Überholvorgang durchführen, ohne die anderen Fahrzeuge auf dem Zielfahrstreifen zu behindern. Entsprechend kann bei einem Spurwechsel auf einen rechts vom Fahrzeug verlaufenden Fahrstreifen eine Sollgeschwindigkeit auf eine langsamere Flussgeschwindigkeit angepasst werden, um ein Auffahren auf ein anderes Fahrzeug und/oder ein abruptes Verzögern zu vermeiden. Das Anpassen erfolgt insbesondere unter Berücksichtigung einer maximal oder minimal zulässigen Geschwindigkeit.

Der Vorteil der Erfindung ist, dass mittels der bestimmten Verkehrsdichte und der bestimmten Flussgeschwindigkeit ein verbessertes Umfeldabbild gewonnen werden kann. Das Anpassen der Sollgeschwindigkeit kann daher verbessert durchgeführt werden. Insbesondere werden alle relevanten, sich in der Nähe des Fahrzeugs auf dem Zielfahrstreifen befindenden Fahrzeuge berücksichtigt, d.h. sowohl andere Fahrzeuge vor dem Fahrzeug als auch andere Fahrzeuge hinter dem Fahrzeug. Relevant sind hierbei alle Fahrzeuge, die einen Einfluss auf die Verkehrsdichte und/oder die Flussgeschwindigkeit auf dem Zielfahrstreifen haben können.

Die Umfelddaten können insbesondere Sensordaten sein. Hierbei kommen sämtliche bekannten Sensoren in Betracht, insbesondere Radar, LIDAR, Ultraschall und/oder Kameras. Die Umfelddaten können auch über Verkehrsinformationsdienste bereitgestellt werden und beispielsweise bereits Informationen zu einer Verkehrsdichte und/oder einer Flussgeschwindigkeit der Zielfahrspur umfassen. Ferner können Umfelddaten auch über Clouddienste und/oder Car-2-X-Verbindungen bereitgestellt werden.

Das Verfahren wird insbesondere durchgeführt, wenn ein Spurwechselvorgang gestartet wird. Dies kann beispielsweise ein Spurwechselvorgang sein, der durch einen Fahrer manuell gestartet wurde. Ferner kann ein solcher Spurwechselvorgang auch automatisiert von einem halbautomatisiert oder automatisiert gesteuerten Fahrzeug gestartet werden.

Das Fahrzeug kann insbesondere ein Kraftfahrzeug sein. Das Fahrzeug kann jedoch auch ein Transportroboter oder ein sonstiges Land-, Wasser- oder Luftfahrzeug sein.

In einer Ausführungsform ist vorgesehen, dass die Sollgeschwindigkeit nur angepasst wird, wenn die bestimmte aktuelle Verkehrsdichte auf dem Zielfahrstreifen einen Schwellenwert überschreitet. Ist eine Verkehrsdichte beispielsweise nur gering, d.h. befinden sich nur sehr wenige andere Fahrzeuge auf einem Streckenabschnitt des Zielfahrstreifens, so ist es weniger wichtig, eine Geschwindigkeit des Fahrzeugs an eine Flussgeschwindigkeit der anderen Fahrzeuge auf der Zielfahrspur anzupassen. Auch wenn sich auf der Zielfahrspur überhaupt keine anderen Fahrzeuge befinden, kann auf ein Anpassen der Sollgeschwindigkeit verzichtet werden. Hierdurch kann ein Energieverbrauch verringert werden, da unnötiges Beschleunigen oder Verzögern verhindert werden kann.

Entsprechend ist bei der Vorrichtung vorgesehen, dass die Auswerteeinrichtung ferner derart ausgebildet ist, die Sollgeschwindigkeit nur anzupassen, wenn die bestimmte aktuelle Verkehrsdichte auf dem Zielfahrstreifen einen Schwellenwert überschreitet.

In einer weiteren Ausführungsform ist vorgesehen, dass die angepasste Sollgeschwindigkeit bei Vorliegen mindestens eines Rücksetzkriteriums wieder auf die vorher aktive Sollgeschwindigkeit zurückgesetzt wird. Ein solches Rücksetzkriterium kann beispielsweise eine abgelaufene Zeitdauer sein. Beispielsweise kann nach 30 Sekunden oder nach einer Minute die Sollgeschwindigkeit wieder zurückgesetzt werden. Als Rücksetzkriterium kommt ferner auch eine Rückmeldung des Fahrzeugs in Betracht. Wird das Fahrzeug beispielsweise automatisiert gesteuert, so kann nach Durchführen eines Überholvorgangs von einer Steuerung des Fahrzeugs eine Rückmeldung erzeugt werden, dass der Überholvorgang erfolgreich abgeschlossen wurde. Als Rücksetzkriterium wird dann das Vorliegen dieser Rückmeldung überprüft.

In der Vorrichtung ist entsprechend vorgesehen, dass die Auswerteeinrichtung ferner derart ausgebildet ist, die angepasste Sollgeschwindigkeit bei Vorliegen mindestens eines Rücksetzkriteriums wieder auf die vorher aktive Sollgeschwindigkeit zurückzusetzen.

In einer weiteren Ausführungsform ist vorgesehen, dass nach dem Übergeben der angepassten Sollgeschwindigkeit an die Geschwindigkeitsregeleinrichtung bei einem Fahrer des Fahrzeugs mittels einer Mensch-Maschine-Schnittstelle abgefragt wird, ob die angepasste Sollgeschwindigkeit dauerhaft gesetzt bleiben soll oder nicht, wobei die angepasste Sollgeschwindigkeit entsprechend dem Abfrageergebnis gesetzt bleibt oder zurückgesetzt wird. Eine Mensch-Maschine-Schnittstelle kann beispielsweise als einfacher Signalgeber mit einer Taste zum Beibehalten oder Rücksetzen ausgebildet sein. Die Mensch-Maschine-Schnittstelle kann jedoch auch als Anzeige- und Bedieneinrichtung ausgebildet sein, auf der ein entsprechender Dialog dargestellt wird und der Fahrer zur Eingabe aufgefordert wird.

In der Vorrichtung ist demgemäß vorgesehen, dass die Vorrichtung eine Mensch-Maschine-Schnittstelle umfasst, wobei die Auswerteeinrichtung ferner derart ausgebildet ist, nach dem Übergeben der angepassten Sollgeschwindigkeit an die Geschwindigkeitsregeleinrichtung bei einem Fahrer des Fahrzeugs mittels der Mensch-Maschine-Schnittstelle abzufragen, ob die angepasste Sollgeschwindigkeit dauerhaft gesetzt werden soll oder nicht, und die Sollgeschwindigkeit entsprechend dem Abfrageergebnis beizubehalten oder zurückzusetzen.

In einer weiterbildenden Ausführungsform ist vorgesehen, dass eine Fahrerpräferenz auf Grundlage mindestens eines Abfrageergebnisses angelernt wird, wobei anschließend die angepasste Sollgeschwindigkeit in Abhängigkeit der angelernten Fahrerpräferenz ohne weitere Abfrage beim Fahrer beibehalten oder zurückgesetzt wird. Beispielsweise kann vorgesehen sein, dass bei dreimaligem Beibehalten der Sollgeschwindigkeit, fortan davon ausgegangen wird, dass der Fahrer auch zukünftig eine angepasste Sollgeschwindigkeit beibehalten will. Entsprechend wird in Zukunft auf eine Abfrage verzichtet und die angepasste Sollgeschwindigkeit ohne Weiteres beibehalten. Beim Anlernen können auch die Umfelddaten berücksichtigt werden, sodass das jeweilige Umfeld mit berücksichtigt werden kann.

In der Vorrichtung ist entsprechend vorgesehen, dass die Auswerteeinrichtung ferner derart ausgebildet ist, eine Fahrerpräferenz auf Grundlage mindestens eines Abfrageergebnisses anzulernen und anschließend die angepasste Sollgeschwindigkeit in Abhängigkeit der angelernten Fahrerpräferenz ohne weitere Abfrage beim Fahrer beizubehalten oder zurückzusetzen.

Alternativ kann auch vorgesehen sein, dass der Fahrer von vornherein einstellen kann, dass die angepasste Sollgeschwindigkeit immer gesetzt bleiben soll oder alternativ immer nur bis zum Vorliegen eines Rücksetzkriteriums.

In einer weiteren Ausführungsform ist vorgesehen, dass die Sollgeschwindigkeit nur angepasst wird, wenn die angepasste Sollgeschwindigkeit innerhalb eines vorgegebenen Bereichs um die aktuelle Sollgeschwindigkeit und/oder eine aktuelle Istgeschwindigkeit des Fahrzeugs liegt. Der Bereich kann sowohl absolut als auch relativ definiert sein. Beispielsweise kann vorgesehen sein, dass die angepasste Sollgeschwindigkeit nur +/- 10 % von der aktuellen Sollgeschwindigkeit und/oder Istgeschwindigkeit des Fahrzeugs abweichen darf.

In der Vorrichtung ist entsprechend vorgesehen, dass die Auswerteeinrichtung ferner derart ausgebildet ist, die Sollgeschwindigkeit nur anzupassen, wenn die angepasste Sollgeschwindigkeit innerhalb eines vorgegebenen Bereichs um die aktuelle Sollgeschwindigkeit und/oder eine aktuelle Istgeschwindigkeit des Fahrzeugs liegt.

Nachfolgend wird die Erfindung anhand bevorzugter Ausführungsbeispiele unter Bezugnahme auf die Figuren näher erläutert. Hierbei zeigen:
- Fig. 1: eine schematische Darstellung einer Ausführungsform der Vorrichtung zum Unterstützen eines Spurwechselvorgangs;
- Fig. 2: ein schematisches Flussdiagramm zur Erläuterung einer Ausführungsform der Erfindung;
- Fig. 3: ein schematisches Flussdiagramm zur Erläuterung einer weiteren Ausführungsform der Erfindung;
- Fig. 4: ein schematisches Flussdiagramm zur Erläuterung einer weiteren Ausführungsform der Erfindung.

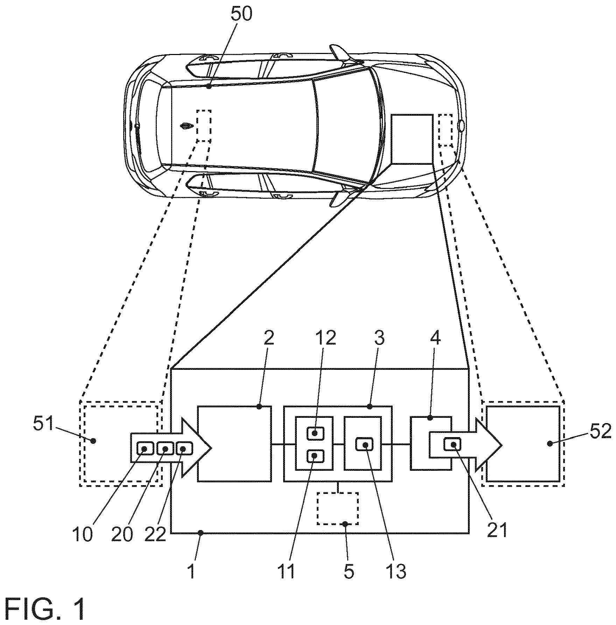

In Fig. 1 ist eine schematische Darstellung einer Ausführungsform der Vorrichtung 1 zum Unterstützen eines Spurwechselvorgangs gezeigt. Die Vorrichtung 1 ist in einem Fahrzeug 50 eingebaut, das als Kraftfahrzeug ausgebildet ist. Die Vorrichtung 1 umfasst eine Eingangseinrichtung 2, eine Auswerteeinrichtung 3 und eine Ausgabeeinrichtung 4.

Das Fahrzeug 50 umfasst eine Geschwindigkeitsregeleinrichtung 52, welche eine Geschwindigkeit des Fahrzeugs 50 auf eine Sollgeschwindigkeit 20 regelt. Ferner umfasst das Fahrzeug 50 eine Umfeldsensorik 51, welche Umfelddaten 10 eines Umfelds des Fahrzeugs 50 erfasst, aufbereitet und bereitstellt. Die Umfeldsensorik 51 stellt die Umfelddaten 10 beispielsweise über ein Datenbussystem, beispielsweise einen Controller Area Network-(CAN)-Bus, der Eingangseinrichtung 2 zur Verfügung. Ferner können der Vorrichtung 1 ebenfalls eine aktuelle Sollgeschwindigkeit 20 und eine aktuelle Istgeschwindigkeit 22 über das Datenbussystem bereitgestellt werden.

Die Eingangseinrichtung 2 empfängt die bereitgestellten Umfelddaten 10, wobei die Umfelddaten 10 zumindest Informationen über andere Fahrzeuge auf einem Zielfahrstreifen umfassen. Ferner können von der Eingangseinrichtung 2 auch Umfelddaten 20 von Verkehrsinformationsdiensten und/oder Clouddiensten oder Car-2-X-Verbindungen abgefragt und bereitgestellt werden.

Die Auswerteeinrichtung 3 bestimmt eine aktuelle Verkehrsdichte 11 und eine aktuelle Flussgeschwindigkeit 12 auf dem Zielfahrstreifen auf Grundlage der Umfelddaten 10. Anschließend passt die Auswerteeinrichtung 3 die Sollgeschwindigkeit 20 auf Grundlage der bestimmten aktuellen Verkehrsdichte 11 und der aktuellen Flussgeschwindigkeit 12 an, sodass eine angepasste Sollgeschwindigkeit 21 bereitgestellt werden kann.

Die angepasste Sollgeschwindigkeit 21 wird anschließend von der Auswerteeinrichtung 3 an die Geschwindigkeitsregeleinrichtung 52 übergeben. Dies erfolgt über die Ausgabeeinrichtung 4, welche die angepasste Sollgeschwindigkeit 21 beispielsweise über das Datenbussystem an die Geschwindigkeitsregeleinrichtung 52 übergibt. Die Geschwindigkeitsregeleinrichtung 52 ersetzt dann die bisherige Sollgeschwindigkeit 20 mit der angepassten Sollgeschwindigkeit 21. Die Geschwindigkeit des Fahrzeugs 50 wird von der Geschwindigkeitsregeleinrichtung 52 in der Folge auf die angepasste Sollgeschwindigkeit 21 geregelt.

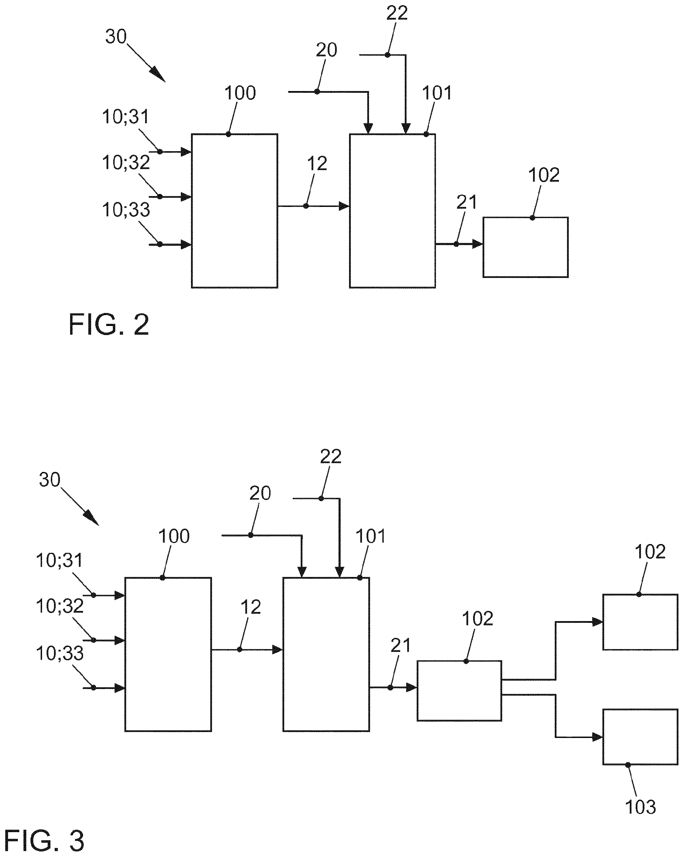

In Fig. 2 ist ein schematisches Flussdiagramm 30 zur Erläuterung der Erfindung gezeigt. Auf Grundlage von empfangenen Umfelddaten 10, welche als Sensordaten 31, Verkehrsinformationsdaten 32 und/oder Clouddaten/Car-2-X-Daten 33 vorliegen können, werden in einem ersten Verfahrensschritt 100 eine Verkehrsdichte 11 und eine aktuelle Flussgeschwindigkeit 12 auf dem Zielfahrstreifen bestimmt. Anschließend wird im Verfahrensschritt 101 unter Berücksichtigung der aktuellen Sollgeschwindigkeit 20 und der aktuellen Istgeschwindigkeit 22 auf Grundlage der aktuellen Flussgeschwindigkeit 12 und der aktuellen Verkehrsdichte 11 eine angepasste Sollgeschwindigkeit 21 berechnet. Ist die aktuelle Sollgeschwindigkeit 20 beispielsweise kleiner als die Flussgeschwindigkeit 12, so wird die Sollgeschwindigkeit 20 entsprechend erhöht. Ist die aktuelle Sollgeschwindigkeit 20 hingegen größer als die Flussgeschwindigkeit 12, so wird die Sollgeschwindigkeit 20 entsprechend verringert.

Die aktuelle Istgeschwindigkeit 22 wird beispielsweise beim Berechnen einer Differenz von aktueller Sollgeschwindigkeit 20 zu angepasster Sollgeschwindigkeit 21 berücksichtigt. Wenn die angepasste Sollgeschwindigkeit 21 näher an der aktuellen Istgeschwindigkeit 22 liegt, kann ein anschließendes Beschleunigen oder Verzögern entsprechend kleiner ausfallen, sodass Treibstoff eingespart werden kann. Dies kann beim Anpassen der aktuellen Sollgeschwindigkeit 20 berücksichtigt werden.

Die angepasste Sollgeschwindigkeit 21 wird anschließend im Verfahrensschritt 102 an die Geschwindigkeitsregeleinrichtung des Fahrzeugs übergeben. Die Geschwindigkeitsregeleinrichtung ersetzt dann die aktuelle Sollgeschwindigkeit 20 durch die angepasste Sollgeschwindigkeit 21.

Es kann vorgesehen sein, dass die Sollgeschwindigkeit 20 nur angepasst wird, wenn die bestimmte aktuelle Verkehrsdichte 11 auf dem Zielfahrstreifen einen Schwellenwert überschreitet. Beispielsweise kann der Schwellenwert eine bestimmte Anzahl von anderen Fahrzeugen pro Streckenabschnitt oder pro Zeitintervall definieren. Erst wenn der Schwellenwert überschritten wird, wird die Sollgeschwindigkeit 20 angepasst und die angepasste Sollgeschwindigkeit 21 an die Geschwindigkeitsregeleinrichtung übergeben.

Ferner kann vorgesehen sein, dass die angepasste Sollgeschwindigkeit 20 bei Vorliegen mindestens eines Rücksetzkriteriums 13 (Fig. 1) wieder auf die vorher aktive Sollgeschwindigkeit 20 zurückgesetzt wird. Ein solches Rücksetzkriterium 13 kann beispielsweise das Ablaufen einer vorgegebenen Zeitdauer sein. Nach Ablauf der vorgegebenen Zeitdauer ist das Rücksetzkriterium 13 erfüllt und die Auswerteeinrichtung 3 setzt die angepasste Sollgeschwindigkeit 21 wieder zurück auf die ursprüngliche Sollgeschwindigkeit 20. Hierzu übergibt die Auswerteeinrichtung 3 entsprechend den ursprünglichen Wert der Sollgeschwindigkeit 20 als angepasste Sollgeschwindigkeit 21 an die Geschwindigkeitsregeleinrichtung 52 des Fahrzeugs 50. Alternativ oder zusätzlich kann auch ein erfolgreich ausgeführter Überholvorgang als Rücksetzkriterium 13 verwendet werden.

Es kann ferner vorgesehen sein, dass nach dem Übergeben der angepassten Sollgeschwindigkeit 21 an die Geschwindigkeitsregeleinrichtung bei einem Fahrer des Fahrzeugs mittels einer Mensch-Maschine-Schnittstelle 5 (vgl. Fig. 1) abgefragt wird, ob die angepasste Sollgeschwindigkeit 21 dauerhaft gesetzt bleiben soll oder nicht, wobei die angepasste Sollgeschwindigkeit 21 entsprechend dem Abfrageergebnis gesetzt bleibt oder zurückgesetzt wird. Dies ist schematisch in Fig. 3 verdeutlicht, wobei die Fig. 3 im Wesentlichen der Fig. 2 entspricht. Nachdem die angepasste Sollgeschwindigkeit 21 an die Geschwindigkeitsregeleinrichtung übergeben wurde, erfolgt die Abfrage an der Mensch-Maschine-Schnittstelle 5. Je nach Abfrageergebnis wird die angepasste Sollgeschwindigkeit 21 im Verfahrensschritt 102 dauerhaft beibehalten oder im Verfahrensschritt 103 durch Übergabe der ursprünglichen Sollgeschwindigkeit 20 an die Geschwindigkeitsregeleinrichtung auf die ursprünglich eingestellte Sollgeschwindigkeit 20 zurückgesetzt.

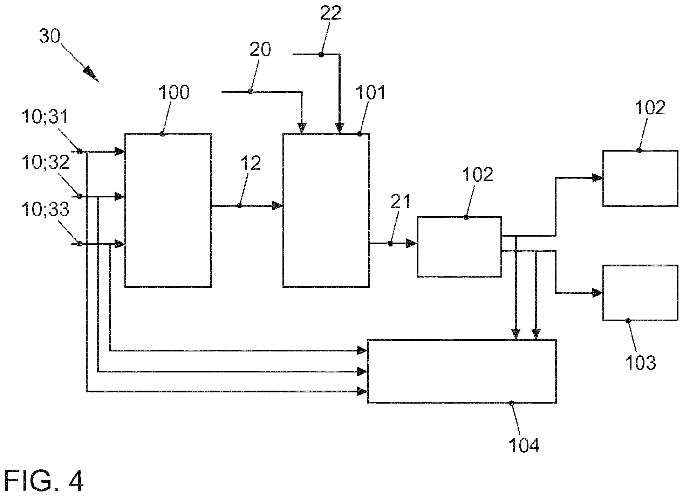

Es kann in einer Weiterbildung ferner vorgesehen sein, dass eine Fahrerpräferenz auf Grundlage mindestens eines Abfrageergebnisses angelernt wird, wobei anschließend die angepasste Sollgeschwindigkeit 21 in Abhängigkeit der angelernten Fahrerpräferenz ohne weitere Abfrage beim Fahrer beibehalten oder zurückgesetzt wird. Dies ist schematisch in Fig. 4 dargestellt, wobei die Fig. 4 auf der Fig. 3 basiert. Es wird zusätzlich der Verfahrensschritt 104 ausgeführt, in dem die Fahrerpräferenz angelernt wird. Dies kann auch unter Berücksichtigung der Umfelddaten 10 erfolgen. Sobald die Fahrerpräferenz angelernt ist, werden die Abfrage beim Fahrer und die Verfahrensschritte 102, 103 nicht mehr durchgeführt.

Es kann vorgesehen sein, dass die Sollgeschwindigkeit 20 nur angepasst wird, wenn die angepasste Sollgeschwindigkeit 21 innerhalb eines vorgegebenen Bereichs um die aktuelle Sollgeschwindigkeit 20 und/oder eine aktuelle Istgeschwindigkeit 22 des Fahrzeugs liegt.

### Bezugszeichenliste

- 1: Vorrichtung
- 2: Eingangseinrichtung
- 3: Auswerteeinrichtung
- 4: Ausgabeeinrichtung
- 5: Mensch-Maschine-Schnittstelle
- 10: Umfelddaten
- 11: aktuelle Verkehrsdichte
- 12: aktuelle Flussgeschwindigkeit
- 13: Rücksetzkriterium
- 20: aktuelle Sollgeschwindigkeit
- 21: angepasste Sollgeschwindigkeit
- 22: aktuelle Istgeschwindigkeit
- 30: Informationsflussdiagramm
- 31: Sensordaten
- 32: Verkehrsinformationen
- 33: Clouddaten/Car-2-X-Daten
- 50: Fahrzeug
- 51: Umfeldsensorik
- 52: Geschwindigkeitsregeleinrichtung
- 100-104: Verfahrensschritte

## Patentansprüche

1. Verfahren zum Unterstützen eines Spurwechselvorgangs für ein Fahrzeug (50) mit einer Geschwindigkeitsregeleinrichtung (52), wobei die Geschwindigkeitsregeleinrichtung (52) eine Geschwindigkeit des Fahrzeugs (50) auf eine Sollgeschwindigkeit (20) regelt, umfassend die folgenden Schritte:
Empfangen von Umfelddaten (10) eines Umfelds des Fahrzeugs (50) mittels einer Eingangseinrichtung (2), wobei die Umfelddaten (10) zumindest Informationen über andere Fahrzeuge auf einem Zielfahrstreifen umfassen,
Bestimmen einer aktuellen Verkehrsdichte (11) und einer aktuellen Flussgeschwindigkeit (12) auf dem Zielfahrstreifen auf Grundlage der Umfelddaten (10) mittels einer Auswerteeinrichtung (3), wobei die Verkehrsdichte (11) als Fahrzeuge pro Streckenabschnitt definiert ist, und wobei die Flussgeschwindigkeit eine Durchschnittsgeschwindigkeit der Fahrzeuge auf dem Zielfahrstreifen ist,
Anpassen der Sollgeschwindigkeit (20) auf Grundlage der bestimmten aktuellen Verkehrsdichte (11) und der aktuellen Flussgeschwindigkeit (12) mittels der Auswerteeinrichtung (3),
Übergeben der angepassten Sollgeschwindigkeit (21) an die Geschwindigkeitsregeleinrichtung (52).

2. Verfahren nach Anspruch 1, **dadurch gekennzeichnet, dass** die Sollgeschwindigkeit (20) nur angepasst wird, wenn die bestimmte aktuelle Verkehrsdichte (11) auf dem Zielfahrstreifen einen Schwellenwert überschreitet.

3. Verfahren nach Anspruch 1 oder 2, **dadurch gekennzeichnet, dass** die angepasste Sollgeschwindigkeit (21) bei Vorliegen mindestens eines Rücksetzkriteriums (13) wieder auf die vorher aktive Sollgeschwindigkeit (20) zurückgesetzt wird.

4. Verfahren nach einem der vorangegangenen Ansprüche, **dadurch gekennzeichnet, dass** nach dem Übergeben der angepassten Sollgeschwindigkeit (21) an die Geschwindigkeitsregeleinrichtung (52) bei einem Fahrer des Fahrzeugs (50) mittels einer Mensch-Maschine-Schnittstelle (5) abgefragt wird, ob die angepasste Sollgeschwindigkeit (21) dauerhaft gesetzt bleiben soll oder nicht, wobei die angepasste Sollgeschwindigkeit (21) entsprechend dem Abfrageergebnis gesetzt bleibt oder zurückgesetzt wird.

5. Verfahren nach Anspruch 4, **dadurch gekennzeichnet, dass** eine Fahrerpräferenz auf Grundlage mindestens eines Abfrageergebnisses angelernt wird, wobei anschließend die angepasste Sollgeschwindigkeit (21) in Abhängigkeit der angelernten Fahrerpräferenz ohne weitere Abfrage beim Fahrer beibehalten oder zurückgesetzt wird.

6. Verfahren nach einem der vorangegangenen Ansprüche, **dadurch gekennzeichnet, dass** die Sollgeschwindigkeit (20) nur angepasst wird, wenn die angepasste Sollgeschwindigkeit (21) innerhalb eines vorgegebenen Bereichs um die aktuelle Sollgeschwindigkeit (20) und/oder eine aktuelle Istgeschwindigkeit (20) des Fahrzeugs (50) liegt.

7. Vorrichtung (1) zum Unterstützen eines Spurwechselvorgangs für ein Fahrzeug (50) mit einer Geschwindigkeitsregeleinrichtung (52), wobei die Geschwindigkeitsregeleinrichtung (52) eine Geschwindigkeit des Fahrzeugs (50) auf eine Sollgeschwindigkeit (20) regelt, umfassend:
eine Eingangseinrichtung (2), wobei die Eingangseinrichtung (2) derart ausgebildet ist, Umfelddaten (10) eines Umfelds des Fahrzeugs (50) zu empfangen, wobei die Umfelddaten (10) zumindest Informationen über andere Fahrzeuge auf einem Zielfahrstreifen umfassen,
eine Auswerteeinrichtung (3), wobei die Auswerteeinrichtung (3) derart ausgebildet ist, eine aktuelle Verkehrsdichte (11) und eine aktuelle Flussgeschwindigkeit (12) auf dem Zielfahrstreifen auf Grundlage der Umfelddaten (10) zu bestimmen, wobei die Verkehrsdichte (11) als Fahrzeuge pro Streckenabschnitt definiert ist und wobei die Flussgeschwindigkeit eine Durchschnittsgeschwindigkeit der Fahrzeuge auf dem Zielfahrstreifen ist, und
die Sollgeschwindigkeit (20) auf Grundlage der bestimmten aktuellen Verkehrsdichte (11) und der aktuellen Flussgeschwindigkeit (12) anzupassen und
die angepasste Sollgeschwindigkeit (21) an die Geschwindigkeitsregeleinrichtung (52) zu übergeben.

8. Vorrichtung (1) nach Anspruch 7, **dadurch gekennzeichnet, dass** die Auswerteeinrichtung (3) ferner derart ausgebildet ist, die Sollgeschwindigkeit (20) nur anzupassen, wenn die bestimmte aktuelle Verkehrsdichte (11) auf dem Zielfahrstreifen einen Schwellenwert überschreitet.

9. Vorrichtung (1) nach Anspruch 7 oder 8, **dadurch gekennzeichnet, dass** die Auswerteeinrichtung (3) ferner derart ausgebildet ist, die angepasste Sollgeschwindigkeit (21) bei Vorliegen mindestens eines Rücksetzkriteriums (13) wieder auf die vorher aktive Sollgeschwindigkeit (20) zurückzusetzen.

10. Vorrichtung (1) nach einem der Ansprüche 7 bis 9, **dadurch gekennzeichnet, dass** die Vorrichtung (1) eine Mensch-Maschine-Schnittstelle (5) umfasst, wobei die Auswerteeinrichtung (3) ferner derart ausgebildet ist, nach dem Übergeben der angepassten Sollgeschwindigkeit (21) an die Geschwindigkeitsregeleinrichtung (52) bei einem Fahrer des Fahrzeugs (50) mittels der Mensch-Maschine-Schnittstelle (5) abzufragen, ob die angepasste Sollgeschwindigkeit (21) dauerhaft gesetzt werden soll oder nicht, und die angepasste Sollgeschwindigkeit (21) entsprechend dem Abfrageergebnis beizubehalten oder zurückzusetzen.

## Claims

1. Method for supporting a lane-changing process for a vehicle (50) with a speed control device (52), wherein the speed control device (52) controls a speed of the vehicle (50) to a target speed (20), comprising the following steps:
receiving surroundings data (10) of a surroundings of the vehicle (50) by means of an input device (2), wherein the surroundings data (10) comprise at least information about other vehicles in a target lane,
determining a current traffic density (11) and a current flow speed (12) in the target lane on the basis of the surroundings data (10) by means of an evaluation device (3), wherein the traffic density (11) is defined as vehicles per portion of road, and wherein the flow speed is an average speed of the vehicles in the target lane,
adapting the target speed (20) on the basis of the determined current traffic density (11) and the current flow speed (12) by means of the evaluation device (3),
transferring the adapted target speed (21) to the speed control device (52).

2. Method according to claim 1, **characterized in that** the target speed (20) is only adapted if the determined current traffic density (11) in the target lane exceeds a threshold value.

3. Method according to either claim 1 or claim 2, **characterized in that** the adapted target speed (21) is reset to the previously active target speed (20) when at least one reset criterion (13) is present.

4. Method according to any of the preceding claims, **characterized in that** after the adapted target speed (21) has been transferred to the speed control device (52), a driver of the vehicle (50) is queried by means of a human-machine interface (5) as to whether the adapted target speed (21) should remain permanently set or not, the adapted target speed (21) remaining set or being reset according to the query result.

5. Method according to claim 4, **characterized in that** a driver preference is learned on the basis of at least one query result, the adapted target speed (21) subsequently being maintained or reset depending on the learned driver preference without further query of the driver.

6. Method according to any of the preceding claims, **characterized in that** the target speed (20) is only adapted if the adapted target speed (21) is within a predetermined range around the current target speed (20) and/or a current actual speed (20) of the vehicle (50).

7. Apparatus (1) for supporting a lane-changing process for a vehicle (50) with a speed control device (52), wherein the
speed control device (52) controls a speed of the vehicle (50) to a target speed (20), comprising:
an input device (2), wherein the input device (2) is designed to receive surroundings data (10) of a surroundings of the vehicle (50), wherein the surroundings data (10) comprise at least information about other vehicles in a target lane,
an evaluation device (3), wherein the evaluation device (3) is designed to determine a current traffic density (11) and a current flow speed (12) in the target lane on the basis of the surroundings data (10), wherein the traffic density (11) is defined as vehicles per portion of road and wherein the flow speed is an average speed of the vehicles in the target lane, and
to adapt the target speed (20) on the basis of the determined current traffic density (11) and the current flow speed (12) and
to transfer the adapted target speed (21) to the speed control device (52).

8. Apparatus (1) according to claim 7, **characterized in that** the evaluation device (3) is further designed to adapt the target speed (20) only if the determined current traffic density (11) in the target lane exceeds a threshold value.

9. Apparatus (1) according to either claim 7 or claim 8, **characterized in that** the evaluation device (3) is further designed to reset the adapted target speed (21) to the previously active target speed (20) when at least one reset criterion (13) is present.

10. Apparatus (1) according to any of claims 7 to 9, **characterized in that** the apparatus (1) comprises a human-machine interface (5), the evaluation device (3) being further designed, after the adapted target speed (21) has been transferred to the speed control device (52), to query a driver of the vehicle (50) by means of the human-machine interface (5) as to whether the adapted target speed (21) should be set permanently or not, and to maintain or reset the adapted target speed (21) according to the query result.

## Revendications

1. Procédé permettant d'assister une opération de changement de voie pour un véhicule (50) comportant un dispositif de régulation de vitesse (52), dans lequel le dispositif de régulation de vitesse (52) régule une vitesse du véhicule (50) à une vitesse de consigne (20), comprenant les étapes consistant à :
la réception de données d'environnement (10) d'un environnement du véhicule (50) à l'aide d'un dispositif d'entrée (2), dans lequel les données d'environnement (10) comprennent au moins des informations concernant d'autres véhicules sur une voie de circulation cible,
la détermination d'une densité de trafic actuelle (11) et d'une vitesse de flux actuelle (12) sur la voie de circulation cible sur la base des données d'environnement (10) à l'aide d'un dispositif d'évaluation (3), dans lequel la densité de trafic (11) est définie comme les véhicules par tronçon de route, et dans lequel la vitesse de flux est une vitesse moyenne des véhicules sur la voie de circulation cible,
l'adaptation de la vitesse de consigne (20) sur la base de la densité de trafic actuelle (11) déterminée et de la vitesse de flux actuelle (12) à l'aide du dispositif d'évaluation (3),
la transmission de la vitesse de consigne (21) adaptée au dispositif de régulation de vitesse (52).

2. Procédé selon la revendication 1, **caractérisé en ce que** la vitesse de consigne (20) n'est adaptée que si la densité de trafic actuelle (11) déterminée sur la voie de circulation cible dépasse une valeur seuil.

3. Procédé selon la revendication 1 ou 2, **caractérisé en ce que** la vitesse de consigne (21) adaptée est réinitialisée à la vitesse de consigne (20) précédemment active en présence d'au moins un critère de réinitialisation (13).

4. Procédé selon l'une des revendications précédentes, **caractérisé en ce qu'**après avoir transmis la vitesse de consigne (21) adaptée au dispositif de régulation de vitesse (52), on interroge un conducteur du véhicule (50) à l'aide d'une interface homme-machine (5) pour savoir si la vitesse de consigne (21) adaptée doit rester fixée en permanence ou non, dans lequel la vitesse de consigne (21) adaptée reste fixée ou est réinitialisée en fonction du résultat de l'interrogation.

5. Procédé selon la revendication 4, **caractérisé en ce qu'**une préférence du conducteur est apprise sur la base d'au moins un résultat d'interrogation, dans lequel la vitesse de consigne (21) adaptée est ensuite maintenue ou réinitialisée en fonction de la préférence du conducteur apprise sans autre interrogation du conducteur.

6. Procédé selon l'une des revendications précédentes,
**caractérisé en ce que** la vitesse de consigne (20) n'est adaptée que si la vitesse de consigne (21) adaptée se situe dans une plage prédéfinie autour de la vitesse de consigne actuelle (20) et/ou d'une vitesse réelle actuelle (20) du véhicule (50).

7. Dispositif (1) permettant d'assister une opération de changement de voie pour un véhicule (50) comportant un dispositif de régulation de vitesse (52), dans lequel le
dispositif de régulation de vitesse (52) régule une vitesse du véhicule (50) à une vitesse de consigne (20), comprenant :
un dispositif d'entrée (2), dans lequel le dispositif d'entrée (2) est conçu de manière à recevoir des données d'environnement (10) d'un environnement du véhicule (50), dans lequel les données d'environnement (10) comprennent au moins des informations concernant d'autres véhicules sur une voie de circulation cible,
un dispositif d'évaluation (3), dans lequel le dispositif d'évaluation (3) est conçu de manière à déterminer une densité de trafic actuelle (11) et une vitesse de flux actuelle (12) sur la voie de circulation cible sur la base des données d'environnement (10), dans lequel la densité de trafic (11) est définie comme les véhicules par tronçon de route et la vitesse de flux est une vitesse moyenne des véhicules sur la voie de circulation cible, et
adapter la vitesse de consigne (20) sur la base de la densité de trafic actuelle (11) déterminée et de la vitesse de flux actuelle (12), et
transmettre la vitesse de consigne (21) adaptée au dispositif de régulation de vitesse (52).

8. Dispositif (1) selon la revendication 7, **caractérisé en ce que** le dispositif d'évaluation (3) est en outre conçu de manière à adapter la vitesse de consigne (20) uniquement lorsque la densité de trafic actuelle (11) déterminée sur la voie de circulation cible dépasse une valeur seuil.

9. Dispositif (1) selon la revendication 7 ou 8, **caractérisé en ce que** le dispositif d'évaluation (3) est en outre conçu de telle sorte qu'en présence d'au moins un critère de réinitialisation (13), la vitesse de consigne (21) adaptée est réinitialisée à la vitesse de consigne (20) précédemment active.

10. Dispositif (1) selon l'une des revendications 7 à 9, **caractérisé en ce que** le dispositif (1) comprend une interface homme-machine (5), dans lequel le dispositif d'évaluation (3) est en outre conçu de manière à, après avoir transmis la vitesse de consigne (21) adaptée au dispositif de régulation de vitesse (52), interroger un conducteur du véhicule (50) au moyen de l'interface homme-machine (5) pour savoir si la vitesse de consigne (21) adaptée doit être fixée de manière permanente ou non, et maintenir ou réinitialiser la vitesse de consigne (21) adaptée en fonction du résultat de l'interrogation.
